# FASCICULE DE BREVET EUROPEEN

(11) **EP 2 499 570 B1**
(45) Date de publication et mention de la délivrance du brevet: **08.05.2019**
(21) Numéro de dépôt: 10790584.6
(22) Date de dépôt: 28.10.2010
(51) Int. Cl.: G06F 9/50

(54) **PROCEDE ET DISPOSITIF D'OPTIMISATION D'EXECUTION D'APPLICATIONS LOGICIELLES DANS UNE ARCHITECTURE MULTIPROCESSEUR COMPRENANT PLUSIEURS CONTROLEURS D'ENTREE/SORTIE ET UNITES DE CALCUL SECONDAIRES**
VERFAHREN UND VORRICHTUNG ZUR OPTIMIERUNG DER AUSFÜHRUNG VON SOFTWAREANWENDUNGEN IN EINER MULTIPROZESSORARCHITEKTUR EINSCHLIESSLICH EINER VIELZAHL VON EINGABE-/AUSGABESTEUERUNGEN UND SEKUNDÄRPROZESSOREINHEITEN
METHOD AND DEVICE FOR OPTIMISING THE EXECUTION OF SOFTWARE APPLICATIONS IN A MULTIPROCESSOR ARCHITECTURE INCLUDING A PLURALITY OF INPUT/OUTPUT CONTROLLERS AND SECONDARY PROCESSING UNITS

(30) Priorité: 13.11.2009 FR 0905453
(43) Date de publication de la demande: 19.09.2012
(73) Titulaire: Bull SAS, 78340 Les Clayes-sous-Bois (FR)
(72) Inventeur: DERR, Simon, F-38400 Saint-Martin d'Heres (FR); GARRIGUES, Philippe, F-38330 Montbonnot (FR); WELTERLEN, Benoît, F-38000 Grenoble (FR)
(74) Mandataire: Santarelli
(86) Numéro de dépôt international: PCT/FR2010/052312
(87) Numéro de publication internationale: WO 2011/058260

(56) Documents cités:
- WO-A1-01/18641
- WO-A2-2006/083043
- NEELIMA MEHDIRATTA ET AL: "A Bottom-Up Approach to Task Scheduling on Distributed Memory Multiprocessors", PARALLEL PROCESSING, 1994. ICPP 1994. INTERNATIONAL CONFERENCE ON, IEEE, PISCATAWAY, NJ, USA, 15 août 1994 (1994-08-15), pages 151-154, XP031462575, ISBN: 978-0-8493-2493-2
- MANFU MA ET AL: "A Grid-distance Based Scheduling for Grid Resource Management", HIGH-PERFORMANCE COMPUTING IN ASIA-PACIFIC REGION, 2005. PROCEEDINGS. EIGHTH INTERNATIONAL CONFERENCE ON BEIJING, CHINA 30-03 NOV. 2005, PISCATAWAY, NJ, USA,IEEE LNKD- DOI:10.1109/HPCASIA.2005.4, 30 novembre 2005 (2005-11-30), pages 576-581, XP010895507, ISBN: 978-0-7695-2486-3

## Description

La présente invention concerne le placement de calculs dans une architecture multiprocesseur et plus particulièrement un procédé et un dispositif d'optimisation d'exécution d'applications logicielles dans une architecture multiprocesseur comprenant plusieurs contrôleurs d'entrée/sortie et unités de calcul secondaires telles que des processeurs graphiques.

En raison des contraintes physiques liées aux microprocesseurs et limitant leurs performances, des architectures basées sur la mise en oeuvre de plusieurs microprocesseurs, permettant d'effectuer des calculs parallèles, ont été développées. Ces architectures multiprocesseur autorisent l'exécution d'un grand nombre d'applications et/ou d'applications, découpées en étapes, faisant appel à une quantité importante de calcul.

Les processeurs mis en oeuvre dans de telles architectures sont généralement capables de traiter en parallèle des processus (appelés *threads* en terminologie anglo-saxonne) complexes.

Par ailleurs, des processeurs spécifiques ont été développés pour répondre à des besoins particuliers, notamment pour les opérations d'affichage et de manipulation de données graphiques. Ces processeurs, appelés processeurs graphiques ou GPU (sigle de *Graphics Processing Unit* en terminologie anglo-saxonne) agissent massivement en parallèle et permettent notamment de traiter simultanément un grand nombre de processus simples. Ils sont particulièrement efficaces pour traiter des calculs répétitifs. Cependant, alors que ces processeurs ont été développés pour répondre à des besoins très particuliers, certains permettent aujourd'hui d'effectuer des calculs non spécifiques. A titre d'illustration, la technologie CUDA (CUDA est une marque), développée par la société nVidia, répond à des problèmes de calculs complexes.

Ainsi, pour améliorer les performances de calculateurs hautes performances ou HPC (sigle d'*High-Performance Computing* en terminologie anglo-saxonne), des architectures combinant des processeurs classiques et des processeurs spécifiques tels que des processeurs graphiques ont été développées.

On connaît ainsi le document brevet WO2006/083043 qui décrit un dispositif pour décharger des tâches parmi les noeuds d'un système distribué. On connaît également le document brevet WO01/18641 qui décrit une architecture permettant de rediriger une requête d'une machine cliente vers une machine serveur plus proche.

La mise en oeuvre de ces différents types de processeurs nécessite une importante quantité de transferts de données entre eux et la mémoire. Par conséquent, des contrôleurs d'entrée/sortie sont utilisés. Il s'agit par exemple de composants d'un chipset (composants électroniques intégrés permettant de gérer les flux de données numériques entre des processeurs, de la mémoire et des périphériques) qui permettent de faire le pont entre les interconnexions de processeurs standard et des bus d'entrée/sortie tels que des bus de type PCI-e (sigle de *Peripheral Component Interconnect Express* en terminologie anglo-saxonne).

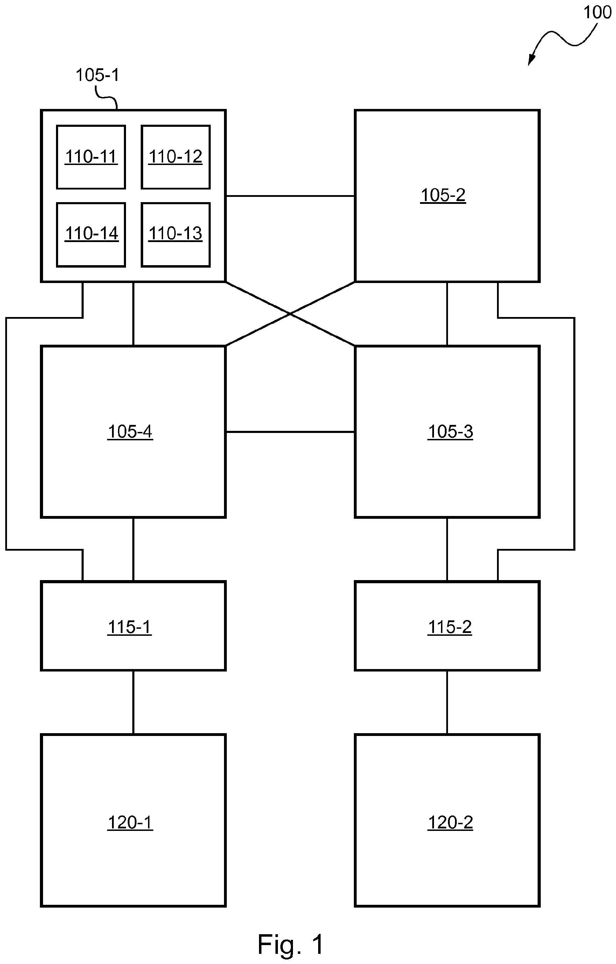

La figure 1 illustre un exemple d'une telle architecture multiprocesseur comprenant plusieurs contrôleurs d'entrée/sortie et processeurs graphiques.

Comme illustré, le système 100 comprend ici quatre processeurs principaux référencés 105-1 à 105-4 (génériquement référencés 105), par exemple des processeurs de type Nehalem (Nehalem est une marque) développés par la société Intel. Chacun de ces processeurs comprend ici quatre coeurs (processeurs quadricores) représentés de façon schématique. A titre d'illustration, le processeur 105-1 comprend les coeurs 110-11 à 110-14.

Selon cet exemple, chaque processeur principal est relié à tous les autres processeurs principaux via un lien de communication rapide, par exemple un lien de type QPI (sigle de *Quick Path Interconnect* en terminologie anglo-saxonne).

Le système 100 comprend en outre deux contrôleurs d'entrée/sortie 115-1 et 115-2, aussi appelés I/O Hub ou IOH (sigle d'*Input*/*Output Hub* en terminologie anglo-saxonne). Chaque IOH est ici relié à deux processeurs principaux. L'IOH 115-1 est ainsi relié aux processeurs 105-1 et 105-4 tandis que l'IOH 115-2 est relié aux processeurs 105-2 et 105-3. La connexion entre IOHs et processeurs est, par exemple, du type QPI.

Les IOHs sont en outre chacun connectés à un ou plusieurs processeurs graphiques pouvant notamment être regroupés sur une carte spécifique. Les IOHs 115-1 et 115-2 sont ici reliés aux processeurs graphiques 120-1 et 120-2, respectivement. Le lien de communication entre un IOH et un ensemble de processeurs graphiques est, par exemple, du type PCI-e.

Une telle architecture permet ainsi aux processeurs 105-1 et 105-4 d'accéder directement au processeur graphique 120-1 et aux processeurs 105-2 et 105-3 d'accéder directement au processeur graphique 120-2. En outre, les processeurs 105-1 et 105-4 peuvent accéder au processeur graphique 120-2, de façon indirecte, via l'interconnexion des processeurs 105-2 et 105-3. De même, les processeurs 105-2 et 105-3 peuvent accéder au processeur graphique 120-1 via l'interconnexion des processeurs 105-1 et 105-4.

Lorsqu'un tel système est mis en oeuvre, une bibliothèque est généralement utilisée pour gérer les appels des applications exécutées par les processeurs principaux aux fonctions exécutées par les processeurs graphiques. Cette bibliothèque a notamment pour objet de déterminer le ou les processeurs graphiques devant exécuter ces fonctions.

Il est observé ici que des processeurs graphiques peuvent être identifiés par les utilisateurs selon certaines de leurs caractéristiques telles que leur performance ou leur version. Ainsi, des utilisateurs peuvent, à travers la bibliothèque utilisée pour gérer les appels aux fonctions exécutées par des processeurs graphiques, utiliser ces informations afin de choisir ces derniers selon les fonctions à exécuter.

Bien que ces solutions aient prouvé leur efficacité, il existe néanmoins un besoin constant pour les améliorer afin de répondre aux besoins de calculs, de plus en plus importants, exigés par de nombreuses applications, notamment dans le domaine de la simulation, ce que propose l'invention décrite.

L'invention a ainsi pour objet un procédé pour optimiser l'exécution d'une application logicielle comprenant au moins un appel à au moins une fonction devant être exécutée par une unité de calcul secondaire, ladite application logicielle étant exécutée dans un système comprenant au moins une pluralité de processeurs principaux, une pluralité d'unités de calcul secondaires et une pluralité de contrôleurs d'entrée/sortie, chaque contrôleur d'entrée/sortie de ladite pluralité de contrôleurs d'entrée/sortie étant relié à au moins un processeur principal de ladite pluralité de processeurs principaux et chaque unité de calcul secondaire de ladite pluralité d'unités de calcul secondaires étant reliée à un contrôleur d'entrée/sortie de ladite pluralité de contrôleurs d'entrée/sortie, ce procédé comprenant les étapes suivantes,
- détermination de la topologie dudit système ;
- interception dudit au moins un appel à ladite au moins une fonction devant être exécutée par au moins une unité de calcul secondaire ;
- identification du processeur principal ayant généré ledit au moins un appel ;
- identification d'au moins une unité de calcul secondaire dans ladite pluralité d'unités de calcul secondaires, ladite au moins une unité de calcul secondaire étant identifiée selon ledit processeur principal identifié et selon ladite topologie dudit système ; et,
- modification dudit au moins un appel pour forcer l'exécution d'au moins une partie de ladite au moins une fonction dans ladite au moins une unité de calcul secondaire identifiée.

Le procédé selon l'invention permet ainsi de choisir les unités de calcul secondaires dans lesquelles doivent être exécutées des fonctions appelées selon la topologie du système et la place des processeurs principaux à l'origine de ces appels dans cette topologie afin d'optimiser le placement d'exécution des fonctions.

Selon un mode de réalisation particulier, l'étape de détermination de ladite topologie dudit système comprend une étape de constitution d'au moins une liste associée à au moins un desdits processeurs principaux, ladite liste comprenant au moins un identifiant d'au moins l'une desdites unités de calcul secondaires et une mesure de distance entre ledit au moins un desdits processeurs principaux et ladite au moins une desdites unités de calcul secondaire correspondant audit au moins un identifiant. Une telle liste permet d'identifier rapidement une unité de calcul secondaire en fonction d'un processeur principal particulier et de la distance les séparant.

De façon avantageuse, le procédé comprend en outre une étape de test de disponibilité de ladite au moins une unité de calcul secondaire identifiée afin de sélectionner une unité de calcul secondaire disponible pour exécuter la fonction appelée.

Selon un mode de réalisation particulier, ladite au moins une unité de calcul secondaire identifiée est l'unité de calcul secondaire disponible la plus proche dudit processeur principal ayant généré ledit au moins un appel. Les temps de latence induits par la distance entre un processeur principal et une unité de calcul secondaire exécutant une fonction appelée par ce dernier sont ainsi minimisés.

Ladite topologie est, de préférence, déterminée selon des informations propres à un système d'exploitation mis en oeuvre dans ledit système. La topologie du système peut ainsi être déterminée sans nécessiter d'information complémentaire.

Selon un mode de réalisation particulier, ladite étape de détermination de ladite topologie comprend les étapes suivantes,
- identification d'au moins une unité de calcul secondaire de ladite pluralité de calcul secondaires ;
- identification d'au moins un bus auquel est connecté ladite au moins une unité de calcul secondaire identifiée durant ladite étape de détermination de ladite topologie ; et,
- identification d'au moins un processeur principal de ladite pluralité de processeurs principaux connecté audit au moins un bus identifié.

La topologie d'un système peut ainsi être déterminée à partir d'informations propres à un système d'exploitation tel que LINUX.

Toujours selon un mode de réalisation particulier, ladite étape de modification dudit au moins un appel comprend une étape de surcharge d'une fonction exécutée lors d'un traitement dudit au moins un appel. L'invention peut ainsi être mise en oeuvre facilement sans nécessiter de modification particulière au niveau des applications logicielles exécutées par le système.

Toujours selon un mode de réalisation particulier, les étapes décrites précédemment sont mises en oeuvre dans une bibliothèque chargée dynamiquement préalablement à l'exécution de ladite application logicielle. L'invention est alors particulièrement simple à mettre en oeuvre.

L'invention a également pour objet un programme d'ordinateur comprenant des instructions adaptées à la mise en oeuvre de chacune des étapes du procédé décrit précédemment lorsque ledit programme est exécuté sur un ordinateur ainsi qu'un dispositif comprenant des moyens adaptés à la mise en oeuvre de chacune des étapes du procédé décrit précédemment.

Les avantages procurés par ce programme d'ordinateur et ce dispositif sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre un exemple d'une architecture simple multiprocesseur comprenant plusieurs contrôleurs d'entrée/sortie et processeurs graphiques dans laquelle l'invention peut être mise en oeuvre ;
- la figure 2 illustre un exemple d'une architecture complexe multiprocesseur comprenant plusieurs contrôleurs d'entrée/sortie et processeurs graphiques dans laquelle l'invention peut être mise en oeuvre ;
- la figure 3 illustre schématiquement certaines étapes d'un exemple du procédé mis en oeuvre pour forcer le choix d'une unité de calcul secondaire particulière lors d'un appel à une fonction devant être exécutée par une unité de calcul secondaire ; et,
- la figure 4 illustre plus précisément l'étape d'identification d'une unité de calcul secondaire présentée sur la figure précédente.

Lorsqu'un seul contrôleur d'entrée/sortie (ou IOH, sigle d'*Input*/*Output Hub* en terminologie anglo-saxonne) est utilisé dans un système de calculs, les processeurs principaux (ou CPUs, sigle de *Central Processing Unit* en terminologie anglo-saxonne) reliés à cet IOH accèdent à la même vitesse aux unités de calcul secondaires, par exemple aux processeurs graphiques (ou GPU, sigle de *Graphics Processing Unit* en terminologie anglo-saxonne), qui lui sont reliées. Cependant, lorsque plusieurs IOHs sont présents, il est possible, en fonction de la topologie du système de calculs, que plusieurs processeurs principaux n'accèdent pas à la même vitesse à une unité de calcul secondaire donnée.

Par exemple, en référence à la figure 1, si les CPUs 105-1 et 105-4 accèdent tous les deux à la même vitesse aux GPUs 120-1 auxquels ils sont directement reliés via l'IOH 115-1 et que les CPUs 105-2 et 105-3 accèdent également tous les deux à la même vitesse aux GPUs 120-1 auxquels ils sont indirectement reliés via l'IOH 115-1, les CPUs 105-1 et 105-4 n'accèdent pas à la même vitesse aux GPUs 120-1 que les CPUs 105-2 et 105-3.

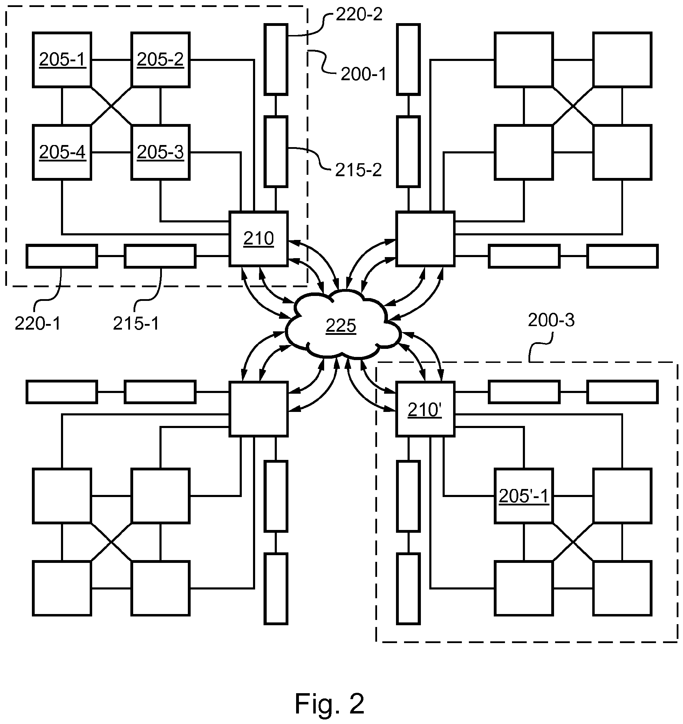

Il a ainsi été observé qu'une application ou un processus s'exécutant sur un processeur principal lié directement à un IOH doit, autant que possible, communiquer avec des unités de calcul secondaires liées à cet IOH pour éviter de dégrader les performances du système de calcul. Ce problème est d'autant plus vrai sur de plus gros systèmes tels que celui illustré sur la figure 2.

Comme illustré sur celle-ci, le système de calculs comprend ici quatre sous-systèmes ayant une même architecture et comprenant chacun plusieurs processeurs principaux et plusieurs unités de calcul secondaire, ici des processeurs graphiques.

A titre d'illustration, le sous-système 200-1 comprend quatre processeurs principaux référencés 205-1 à 205-4, par exemple des processeurs de type Nehalem. Chaque processeur principal est ici relié à tous les autres processeurs principaux de son sous-ensemble via un lien de communication rapide, par exemple un lien de type QPI (sigle de *Quick Path Interconnect* en terminologie anglo-saxonne).

Le sous-système 200-1 comprend en outre un élément de communication 210 auquel sont connectés tous les processeurs principaux 205-1 à 205-4 et auquel sont également connectés deux IOHs 215-1 et 215-2. Un tel élément de communication est, par exemple, un composant de type BCS (sigle de *Bull Coherent Switch* en terminologie anglo-saxonne).

Les IOHs sont en outre chacun connectés à un ou plusieurs processeurs graphiques. Les IOHs 215-1 et 215-2 sont ici reliés aux processeurs graphiques 220-1 et 220-2, respectivement. Le lien de communication entre un IOH et un processeur graphique est, par exemple, du type PCI-e (sigle de *Peripheral Component Interconnect Express* en terminologie anglo-saxonne).

Par ailleurs, plusieurs composants de type BCS peuvent être connectés entre eux, par exemple selon un mode de connexion point-à-point de type XCSI (sigle *d'eXtended Common System Interface* en terminologie anglo-saxonne). Il est ainsi possible de relier les sous-systèmes entre eux via le réseau 225 de type XCSI.

Ainsi, selon cette architecture, chaque processeur est capable de faire appel aux fonctions de chaque processeur graphique.

Cependant, comme évoqué précédemment, il a été observé que tous les CPUs n'accèdent pas à la même vitesse à tous les GPUs. Par exemple, alors que les CPUs 205-1 à 205-4 accèdent tous les quatre à la même vitesse aux GPUs 220-1 et 220-2 auxquels ils sont directement reliés via les IOHs 215-1 et 215-2, respectivement, et l'élément de communication 210, le CPU 205'-1 du sous-système 200-3 accède à une vitesse plus faible à ces GPUs en raison de la latence introduite par l'élément de communication 210' et le réseau 225.

Lorsqu'un processus ou une application exécuté sur un processeur principal d'un système de calculs tel que ceux illustrés sur les figures 1 et 2 appelle une fonction devant être exécutée par une unité de calcul secondaire, le noyau du système d'exploitation de ce système gère cet appel, par exemple à travers une bibliothèque préalablement chargée. Le rôle de la bibliothèque est notamment de déterminer les paramètres permettant l'exécution de la fonction appelée, en particulier d'identifier la ou les unités de calcul secondaires devant exécuter la fonction.

L'invention a notamment pour objet d'intercepter ces appels pour forcer le choix de la ou des unités de calcul secondaires devant exécuter la ou les fonctions appelées. En d'autres termes, l'appel à une fonction issu d'un processeur principal et visant la réservation d'une unité de calcul secondaire pour exécuter cette fonction est intercepté afin de forcer le choix de cette unité de calcul secondaire pour qu'elle soit aussi proche que possible du processeur principal à l'origine de l'appel, de préférence reliée au même contrôleur d'entrée/sortie que celui auquel est relié le processeur principal à l'origine de l'appel.

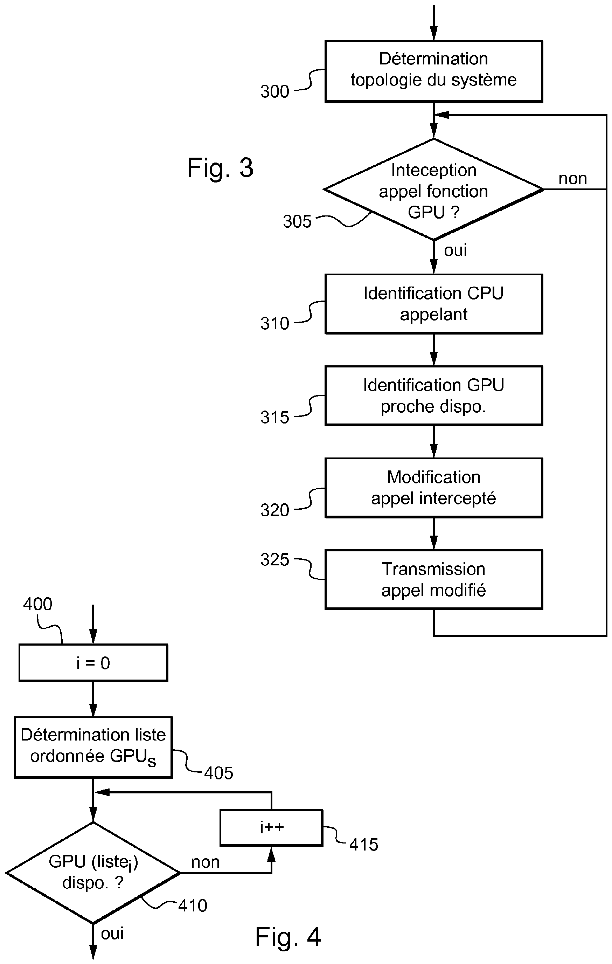

La figure 3 illustre schématiquement certaines étapes d'un exemple du procédé mis en oeuvre pour forcer le choix d'une unité de calcul secondaire particulière lors d'un appel à une fonction devant être exécutée par une unité de calcul secondaire.

Comme illustré, une première étape (étape 300) consiste à déterminer la topologie du système de calculs pour déterminer, en particulier, les liens entre les processeurs principaux, les unités de calcul secondaires et les contrôleurs d'entrée/sortie.

Une partie de cette étape peut notamment consister à analyser des messages de diagnostic ou le journal d'exécution du noyau du système d'exploitation mis en oeuvre dans le système de calculs, généralement appelés fichiers de log. Elle peut également consister à explorer certaines données de la structure hiérarchique des données (système de fichiers) du système d'exploitation.

Ainsi, par exemple, il existe, dans la structure hiérarchique des données du système d'exploitation Linux (Linux est une marque), notamment aux emplacements connus sous le nom de /*sys* et /*proc,* des pseudo fichiers contenant des informations sur le système. Elles sont fournies par le noyau du système d'exploitation et permettent de déterminer la topologie du système de calculs.

A titre d'illustration, la topologie d'un système de calculs peut être déterminée de la façon suivante,
- identification des unités de calcul secondaires ;
- analyse des bus du système de calculs pour identifier les bus (et les contrôleurs d'entrée/sortie) auxquels sont connectés les unités de calcul secondaires ; et,
- identification des processeurs principaux connectés aux bus auxquels sont connectés les unités de calcul secondaires.

L'identification des unités de calcul secondaires nVidia peut, par exemple, être réalisée à partir des informations fournies à l'emplacement suivant :
/*proc*/*driver*/*nvidia*/*cards*/
où sont mémorisées des indications relatives aux pilotes de périphériques de chaque périphérique de type nVidia et, par conséquent, à ces périphériques eux-mêmes.

Il est observé ici que le système de fichiers /*proc* est le répertoire contenant le pseudo système de fichiers du noyau, permettant d'accéder aux informations sur le matériel, la configuration du noyau et sur les processus en cours d'exécution.

Ainsi, en explorant les répertoires de ce type, il est possible d'identifier toutes les unités de calcul secondaires du système de calculs.

De façon similaire, il est possible d'accéder à la configuration des bus du système de calculs pour identifier les bus auxquels sont connectées les unités de calcul secondaires préalablement identifiées. Cette analyse peut, par exemple, être réalisée à partir des informations fournies à l'emplacement suivant :
/*sys*/*bus*/*pci*/*devices*/*0000:xxxxx*
où sont mémorisées des informations relatives aux bus utilisés et, par conséquent, aux contrôleurs d'entrée/sortie utilisés.

Il est observé ici que le système de fichiers /sys est le répertoire contenant, en particulier, le pseudo système de fichiers des gestionnaires de périphériques permettant d'obtenir des informations sur l'ensemble des objets du noyau, en particulier sur l'ensemble des périphériques de système de calculs. Il contient des informations spécifiques propres à des caractéristiques définies de façon plus générale dans le système de fichier /*proc.*

Enfin, il est possible de déterminer les processeurs principaux reliés aux bus précédemment identifiés, par exemple à partir des informations fournies à l'emplacement suivant :
/*proc*/*self*/*stat*
où sont présentes des informations relatives aux processeurs utilisés par l'application appelante.

De façon similaire, il est possible de déterminer les connexions entre les processeurs principaux et, par conséquent, d'établir une structure représentative de la distance entre chaque unité de calcul secondaire et chaque processeur principal. Une telle structure peut, par exemple, être mémorisée dans une table. Un exemple d'une telle table est donné en Annexe (table 1). Elle correspond à la topologie du système de calculs illustré sur la figure 1. Ainsi, comme indiqué, le processeur principal 105-1 est directement connecté à l'unité de calcul secondaire 120-1 (distance nulle) tandis que ce processeur principal est indirectement connecté à l'unité de calcul secondaire 120-2, via un processeur principal (distance égale à un).

De façon avantageuse, cette table est arrangée sous forme de listes ordonnées de telle façon que, lorsqu'un processeur principal est sélectionné, il soit possible d'identifier directement les unités de calcul secondaires les plus proches, celles-ci étant classées par distances croissantes. Un tel exemple de listes classées, basé sur la Table 1, est illustré en Annexe (Table 2). Ainsi, selon cet exemple, lorsque le processeur principal 105-1 est ici sélectionné, il apparaît immédiatement, à la lecture de la première ligne, que l'unité de calcul secondaire la plus proche est l'unité de calcul secondaire 120-1, la suivante étant l'unité de calcul secondaire 120-2. D'autres méthodes peuvent être utilisées pour définir la topologie du système de calcul. En particulier, celle-ci peut être définie, de façon statique, dans un fichier.

Une étape suivante (étape 305) a pour objet de détecter et d'intercepter les appels des processus ou des applications exécutés par les processeurs principaux à des fonctions devant être exécutées par des unités de calcul secondaires telles que des GPUs.

Lorsqu'un tel appel est détecté et intercepté, le processeur principal à l'origine de l'appel est identifié (étape 310). Cette identification peut notamment être réalisée en consultant les données mémorisées dans le fichier /*proc*/*self*/*stat.*

Cette étape est suivie par une étape de détermination d'une liste d'au moins une unité de calcul secondaire disponible pour exécuter la ou les fonctions appelées et située à une distance prédéterminée du processeur principal précédemment identifié, de préférence au plus près (étape 315).

Bien que de façon général l'objet soit d'identifier l'unité de calcul secondaire disponible la plus proche du processeur principal à l'origine de l'appel à une fonction devant être exécutée par une unité de calcul secondaire, il est néanmoins possible que plusieurs unités de calcul secondaires soient nécessaires. Dans ce cas, le nombre d'unités de calcul secondaires identifiées peut dépendre de la nature de la ou des fonctions appelées, c'est-à-dire du nombre d'unités de calcul secondaires requis pour exécuter la ou les fonctions.

En outre, il est observé que l'unité de calcul secondaire la plus proche puisse ne pas être sélectionnée à un instant donné afin qu'elle reste disponible pour exécuter une fonction appelée ultérieurement.

La topologie du système de calculs telle que déterminée précédemment est utilisée pour identifier, en fonction de l'identifiant du processeur principal à l'origine de l'appel, la ou les unités de calcul secondaires devant être utilisées pour exécuter la ou les fonctions appelées.

A ces fins, le processeur principal est tout d'abord identifié pour en déduire les unités de calcul secondaires qui lui sont liées avec les distances correspondantes. Il peut s'agir d'une liste ordonnée d'unités de calcul secondaires. Cette information est directement obtenue à partir de la topologie déterminée, par exemple, à l'aide d'une table similaire à la table 2 donnée en Annexe. Selon un mode de réalisation préféré, les unités de calcul secondaires sont analysées les unes à la suite des autres, par exemple selon l'ordre de la liste ordonnée des unités de calcul secondaires, pour identifier la ou les unités de calcul secondaire disponibles les plus proches.

Un exemple de mise en oeuvre de cette étape 315 est illustré en détail sur la figure 4.

Après avoir initialisé à zéro une variable i représentant un index dans une liste d'unités de calcul secondaires (étape 400), une liste ordonnée des unités de calcul secondaires accessibles par le processeur principal identifié est déterminée (étape 405). Une telle liste est, de préférence, prédéterminée comme décrit en référence à la table 2 présentée en Annexe. Un test est alors effectué pour déterminer si l'unité de calcul secondaire ayant l'index i dans la liste ordonnée est disponible (étape 410). Si elle n'est pas disponible, l'index i est incrémenté de un (étape 415) et le test précédent est répété. Si, au contraire, l'unité de calcul secondaire ayant l'index i est disponible elle est sélectionnée pour exécuter la fonction appelée par le processeur principal.

Si plusieurs unités de calcul secondaires sont nécessaires, les étapes 410 et 415 sont répétées jusqu'à ce que le nombre d'unités de calcul secondaires soit obtenu.

Naturellement, lorsque plusieurs unités de calcul secondaires doivent être sélectionnées, elles peuvent l'être de façon à être les plus proches du processeur principal sélectionné, à être toutes à une même distance, la plus proche possible, du processeur sélectionné, ou à être à une même distance prédéterminée du processeur sélectionné.

A titre d'illustration, conformément à la topologie définie précédemment en référence à la figure 1, si le CPU à l'origine de l'appel est le CPU 105-1, il en est déduit que la liste ordonnée des GPUs est la suivante : 120-1, 120-2. A partir, de cette dernière un test est effectué pour déterminer si le premier GPU, c'est-à-dire le GPU 120-1 le plus proche, est disponible. Dans la négative, un test similaire est effectué sur l'unité de calcul secondaire suivante, c'est-à-dire ici sur l'unité de calcul secondaire 120-2. Si elle l'est, elle est sélectionnée.

Lorsque la ou les unités de calcul secondaires ont ainsi été déterminées, l'appel est modifié (étape 320) avant d'être transmis (étape 325).

La modification d'un appel consiste ici à charger une bibliothèque qui surcharge l'appel d'attribution de l'unité de calcul secondaire, par exemple en faisant appel à la fonction *cudaSetDevice()* qui sert à sélectionner l'unité de calcul secondaire qui exécutera la fonction appelée.

Plus précisément, la fonction *cudaSetDevice()* est ici interceptée et appelée avec les paramètres permettant d'attribuer les unités de calcul secondaires identifiées, par exemple les unités de calcul secondaires les plus proches.

Les étapes précédemment décrites (étapes 305 à 325) sont répétées pour traiter les appels suivants pour exécuter d'autres fonctions sur d'autres unités de calcul secondaires (lorsqu'une unité de calcul secondaire est attribuée à un processus, la fonction décrite en référence à la figure 3 n'est pas réexécutée pour chaque appel à l'unité de calcul secondaire). Ce processus est répété tant que des appels sont susceptibles d'être générés.

Selon un mode de réalisation particulier, une bibliothèque adaptée à mettre en oeuvre l'algorithme décrit en référence à la figure 3 est créée et chargée dynamiquement, par exemple à l'aide de la variable d'environnement LD_PRELOAD, avant l'exécution d'applications faisant appel à des fonctions effectuées dans des unités de calcul secondaires. Il est rappelé ici que la variable d'environnement LD_PRELOAD permet de forcer le chargement d'une bibliothèque additionnelle lors de l'exécution d'une application logicielle. Une telle bibliothèque permet de surcharger un appel à une fonction exécutée lorsqu'une fonction doit être exécutée dans une unité de calcul secondaire.

Ainsi, l'utilisation d'une bibliothèque ayant pour objet d'intercepter des appels à des fonctions exécutées par des unités de calcul secondaires et de modifier ces appels pour forcer l'emplacement d'exécution de ces fonctions selon la topologie du système permet d'accélérer l'exécution de ces applications logicielles sans les modifier.

Naturellement, pour satisfaire des besoins spécifiques, une personne compétente dans le domaine de l'invention pourra appliquer des modifications dans la description précédente. En particulier, si les unités de calcul secondaires peuvent être, en particulier, des processeurs graphiques, il peut également s'agir de circuits particuliers tels que des FPGAs (sigle de *Field-Programmable Gate Array* en terminologie anglo-saxonne) ou des ASICs (sigle *d'Application-Specific Integrated Circuit* en terminologie anglo-saxonne).

### Annexe

**Table 1**

| | **120-1** | **120-2** |
|---|---|---|
| **105-1** | 0 | 1 |
| **105-2** | 1 | 0 |
| **105-3** | 1 | 0 |
| **105-4** | 0 | 1 |

**Table 2**

| | | |
|---|---|---|
| **105-1** | 120-1 | 120-2 |
| **105-2** | 120-2 | 120-1 |
| **105-3** | 120-2 | 120-1 |
| **105-4** | 120-1 | 120-2 |

## Revendications

1. Procédé pour optimiser l'exécution d'une application logicielle comprenant au moins un appel à au moins une fonction devant être exécutée par une unité de calcul secondaire, ladite application logicielle étant exécutée dans un système comprenant au moins une pluralité de processeurs principaux (105, 205), une pluralité d'unités de calcul secondaires (120, 220) et une pluralité de contrôleurs d'entrée/sortie (115, 215), chaque contrôleur d'entrée/sortie de ladite pluralité de contrôleurs d'entrée/sortie étant relié à au moins un processeur principal de ladite pluralité de processeurs principaux et chaque unité de calcul secondaire de ladite pluralité d'unités de calcul secondaires étant reliée à un contrôleur d'entrée/sortie de ladite pluralité de contrôleurs d'entrée/sortie, ce procédé étant **caractérisé en ce qu'**il comprend les étapes suivantes,
- détermination (300) de la topologie dudit système ;
- interception (305) dudit au moins un appel à ladite au moins une fonction devant être exécutée par au moins une unité de calcul secondaire ;
- identification (310) du processeur principal ayant généré ledit au moins un appel ;
- identification (315) d'au moins une unité de calcul secondaire dans ladite pluralité d'unités de calcul secondaires, ladite au moins une unité de calcul secondaire étant identifiée selon ledit processeur principal identifié et selon ladite topologie dudit système ; et,
- modification (320) dudit au moins un appel pour forcer l'exécution d'au moins une partie de ladite au moins une fonction dans ladite au moins une unité de calcul secondaire identifiée.

2. Procédé selon la revendication 1 selon lequel ladite étape de détermination de ladite topologie dudit système comprend une étape de constitution d'au moins une liste associée à au moins un desdits processeurs principaux, ladite liste comprenant au moins un identifiant d'au moins l'une desdites unités de calcul secondaires et une mesure de distance entre ledit au moins un desdits processeurs principaux et ladite au moins une desdites unités de calcul secondaires correspondant audit au moins un identifiant.

3. Procédé selon la revendication 1 ou la revendication 2 comprenant en outre une étape de test de disponibilité (410) de ladite au moins une unité de calcul secondaire identifiée.

4. Procédé selon la revendication précédente selon lequel ladite au moins une unité de calcul secondaire identifiée est l'unité de calcul secondaire disponible la plus proche dudit processeur principal ayant généré ledit au moins un appel.

5. Procédé selon l'une quelconque des revendications précédentes selon laquelle ladite topologie est déterminée selon des informations propres à un système d'exploitation mis en oeuvre dans ledit système.

6. Procédé selon la revendication précédente selon lequel ladite étape de détermination de ladite topologie comprend les étapes suivantes,
- identification d'au moins une unité de calcul secondaire de ladite pluralité de calcul secondaires ;
- identification d'au moins un bus auquel est connecté ladite au moins une unité de calcul secondaire identifiée durant ladite étape de détermination de ladite topologie ; et,
- identification d'au moins un processeur principal de ladite pluralité de processeurs principaux connecté audit au moins un bus identifié.

7. Procédé selon l'une quelconque des revendications précédentes selon lequel ladite étape de modification dudit au moins un appel comprend une étape de surcharge d'une fonction exécutée lors d'un traitement dudit au moins un appel.

8. Procédé selon l'une quelconque des revendications précédentes selon lequel lesdites étapes sont mises en oeuvre dans une bibliothèque chargée dynamiquement préalablement à l'exécution de ladite application logicielle.

9. Programme d'ordinateur comprenant des instructions adaptées à la mise en oeuvre de chacune des étapes du procédé selon l'une quelconque des revendications précédentes lorsque ledit programme est exécuté sur un ordinateur.

10. Dispositif comprenant des moyens adaptés à la mise en oeuvre de chacune des étapes du procédé selon l'une quelconque des revendications 1 à 8.

## Patentansprüche

1. Verfahren zum Optimieren der Ausführung einer Softwareanwendung, mindestens einen Abruf mindestens einer Funktion umfassend, die durch eine sekundäre Recheneinheit ausgeführt werden soll, wobei die Softwareanwendung in einem System ausgeführt wird, das mindestens eine Vielzahl von Hauptprozessoren (105, 205), eine Vielzahl von sekundären Recheneinheiten (120, 220) und eine Vielzahl von Eingabe-/Ausgabesteuerungen (115, 215) umfasst, wobei jede Eingabe-/Ausgabesteuerung der Vielzahl von Eingabe-/Ausgabesteuerungen an mindestens einen Hauptprozessor der Vielzahl von Hauptprozessoren angeschlossen ist, und jede sekundäre Recheneinheit der Vielzahl von Recheneinheiten an eine Eingabe-/Ausgabesteuerung der Vielzahl von Eingabe-/Ausgabesteuerungen angeschlossen ist, wobei dieses Verfahren **dadurch gekennzeichnet ist, dass** es die folgenden Schritte umfasst:
- Bestimmen (300) der Topologie des Systems;
- Abhören (305) des mindestens einen Abrufs mindestens einer Funktion, die durch mindestens eine sekundäre Recheneinheit ausgeführt werden soll;
- Identifizieren (310) des Hauptprozessors, der den mindestens einen Abruf generiert hat;
- Identifizieren (315) mindestens einer sekundären Recheneinheit in der Vielzahl von sekundären Recheneinheiten, wobei die mindestens eine sekundäre Recheneinheit gemäß dem identifizierten Hauptprozessor und gemäß der Topologie des Systems identifiziert wird; und
- Modifizieren (320) des mindestens einen Abrufs, um die Ausführung mindestens eines Teils der mindestens eine Funktion in der mindestens einen identifizierten sekundären Recheneinheit zu erzwingen.

2. Verfahren nach Anspruch 1, wobei der Schritt des Bestimmens der Topologie des Systems einen Schritt des Erstellens mindestens einer Liste umfasst, die mindestens einem der Hauptprozessoren zugeordnet ist, wobei die Liste mindestens eine Kennung zumindest einer der sekundären Recheneinheiten und ein Abstandsmaß zwischen dem mindestens einen der Hauptprozessoren und der mindestens einen der sekundären Recheneinheiten umfasst, die der mindestens einen Kennung entspricht.

3. Verfahren nach Anspruch 1 oder Anspruch 2, darüber hinaus einen Verfügbarkeitstestschritt (410) für die mindestens eine identifizierte sekundäre Recheneinheit umfassend.

4. Verfahren nach dem vorhergehenden Anspruch, wobei die mindestens eine identifizierte sekundäre Recheneinheit die verfügbare sekundäre Recheneinheit ist, die dem Hauptprozessor am nächsten ist, der den mindestens einen Abruf generiert hat.

5. Verfahren nach einem der vorhergehenden Ansprüche, wobei die Topologie gemäß Informationen bestimmt wird, die einem in dem System umgesetzten Betriebssystem zu eigen sind.

6. Verfahren nach dem vorhergehenden Anspruch, wobei der Schritt des Bestimmens der Topologie die folgenden Schritte umfasst:
- Identifizieren mindestens einer sekundären Recheneinheit der Vielzahl von sekundären Recheneinheiten;
- Identifizieren mindestens eines Busses, auf den die mindestens eine identifizierte sekundäre Recheneinheit während des Schritts des Bestimmens der Topologie aufgeschaltet ist; und
- Identifizieren mindestens eines Hauptprozessors der Vielzahl von Hauptprozessoren, der auf den mindestens einen identifizierten Bus aufgeschaltet ist.

7. Verfahren nach einem der vorhergehenden Ansprüche, wobei der Schritt des Modifizierens des mindestens einen Abrufs einen Schritt der Mehrbelastung einer Funktion umfasst, die bei einer Verarbeitung des mindestens einen Abrufs ausgeführt wird.

8. Verfahren nach einem der vorhergehenden Ansprüche, wobei die Schritte in einer dynamisch belasteten Bibliothek vor dem Ausführen der Softwareanwendung umgesetzt werden.

9. Computerprogramm mit Instruktionen, die zur Umsetzung jedes der Schritte des Verfahrens nach einem der vorhergehenden Ansprüche angepasst sind, wenn das Programm auf einem Computer ausgeführt wird.

10. Vorrichtung mit Mitteln, die zur Umsetzung jedes der Schritte des Verfahrens nach einem der Ansprüche 1 bis 8 angepasst sind.

## Claims

1. Method for optimising the execution of a software application, comprising invoking, at least once, at least one function to be executed by a secondary computation unit, said software application being executed within a system comprising at least a plurality of main processors (105, 205), a plurality of secondary computation units (120, 220) and a plurality of input/output controllers (115, 215), each input/output controller of said plurality of input/output controllers being connected to at least one main processor of said plurality of main processors, and each secondary computation unit of said plurality of secondary computation units being connected to an input/output controller of said plurality of input/output controllers, the method being **characterised in that** it comprises the following steps:
- determining (300) the topology of said system;
- intercepting (305) said at least one invocation of said at least one function to be executed by at least one secondary computation unit;
- identifying (310) the main processor that generated said at least one invocation;
- identifying (315) at least one secondary computation unit within said plurality of secondary computation units, said at least one secondary computation unit being identified according to said identified main processor and according to said topology of said system; and
- modifying (320) said at least one invocation to force the execution of at least one part of said at least one function in said at least one identified secondary computation unit.

2. Method according to claim 1, wherein said step of determining said topology of said system comprises a step of establishing at least one list associated with at least one of said main processors, said list comprising at least one identifier of at least one of said secondary computation units and a measurement of the distance between said at least one of said main processors and said at least one of said secondary computation units corresponding to said at least one identifier.

3. Method according to claim 1 or claim 2, further comprising a step of testing (410) the availability of said at least one identified secondary computation unit.

4. Method according to the preceding claim, wherein said at least one identified secondary computation unit is the closest available secondary computation unit to said main processor that generated said at least one invocation.

5. Method according to any one of the preceding claims, wherein said topology is determined according to information specific to an operating system implemented in said system.

6. Method according to the preceding claim, wherein said step of determining said topology comprises the following steps:
- identifying at least one secondary computation unit of said plurality of secondary computation units;
- identifying at least one bus to which said at least one secondary computation unit identified during said step of determining said topology is connected; and
- identifying at least one main processor of said plurality of main processors that is connected to said at least one identified bus.

7. Method according to any one of the preceding claims, wherein said step of modifying said at least one invocation comprises a step of overloading a function that is executed when said at least one invocation is processed.

8. Method according to any one of the preceding claims, wherein said steps are carried out in a library that is loaded dynamically prior to the execution of said software application.

9. Computer program comprising instructions for carrying out each step of the method according to any one of the preceding claims when said program is executed on a computer.

10. Device comprising means configured for carrying out each step of the method according to any one of claims 1 to 8.
